(19) Europäisches Patentamt
European Patent Office
Office européen des brevets

(11) **EP 1 442 654 B1**

(12) **EUROPEAN PATENT SPECIFICATION**

(45) Date of publication and mention
of the grant of the patent:
**03.10.2007 Bulletin 2007/40**

(51) Int Cl.:
*A01G 7/00* (2006.01)   *A01G 9/24* (2006.01)
*E01C 13/08* (2006.01)

(21) Application number: **03029440.9**

(22) Date of filing: **19.12.2003**

(54) **Vegetation ground temperature control method**

Verfahren zur Steuerung der Temperatur eines bepflanzten Grundes

Méthode de contrôle de la température d'un sol planté

(84) Designated Contracting States:
**DE GB**

(30) Priority: **28.01.2003 JP 2003018524**

(43) Date of publication of application:
**04.08.2004 Bulletin 2004/32**

(73) Proprietor: **SATO KOGYO CO., Ltd.**
**Toyama-City,**
**Toyama (JP)**

(72) Inventors:
• **Orimo, Toshiyasu**
**Tokyo (JP)**

• **Kaneko, Noriyoshi**
**Tokyo (JP)**
• **Kuroda, Chitose**
**Tokyo (JP)**
• **Ishibashi, Minoru**
**Tokyo (JP)**

(74) Representative: **Henkel, Feiler & Hänzel**
**Patentanwälte**
**Maximiliansplatz 21**
**80333 München (DE)**

(56) References cited:
WO-A-96/25035          WO-A-03/004774
DE-A- 4 205 010        RU-C- 2 161 670
US-A- 5 368 092

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

BACKGROUND OF THE INVENTION

Field of the Invention

The present invention relates to a vegetation ground temperature control method for accurately performing supply and control of a heat transfer medium, such as hot water, to a pipe buried in the earth in a soccer stadium or the like where a lawn is planted.

Description of the Related Art

In recent years, in the soil of, for example, a soccer stadium, a playground, or a golf course where a lawn is planted, for the purpose of avoiding an influence on the lawn due to temperature drop according to insufficient sunshine or seasons, or temporal temperature drop in rainfall or night, lawn roughness by various games, the influence of fallen snow or frost, snow removal, or the like, a pipe for circulating a heat transfer medium is buried in the ground, the environment in which the growth of the lawn is facilitated is artificially formed, and assistance to the greening of the lawn is performed.

For example, in patent document 1 mentioned below, a vegetation ground temperature control method is proposed in which in order to cause the soil temperature of a control object area to become suitable for the lawn growth environment, a pipe enabling a heat transfer medium such as hot water to be supplied is laid throughout the vegetation ground, and a temperature sensor is buried in the soil, and while the heat conductivity of the ground is considered, the temperature of the heat transfer medium supplied to the pipe is changed.

[Patent document 1]

JP-A-8-196140

However, a stadium such as a soccer stadium or a playground may be used for a throwing event such as a javelin throw or a shot put, and because of lawn cutting by a lawn mower or re-covering of the lawn, there occurs a problem that a temperature sensor can not be buried in, not to mention the ground surface, an area from the ground surface to a place at a depth of several tens cm, specifically, at a depth of about 30 cm. Although it has turned out from past experiments or the like that a ground area from the ground surface to a place at a depth of GL-5 cm (hereinafter referred to as a ground surface layer area) generally has a great influence on the growth of the lawn, as described before, since a sensor or the like can not buried in the area from the ground surface to the place at a depth of about 30 cm, there is a distance between a pipe installation position as a heating point and the ground surface layer area as a temperature target point, and therefore, a time lag in heat response becomes a problem in the heat conduction analysis.

Besides, it has turned out that weather conditions on the ground surface have a great influence on the heat balance of the lawn surface and has an influence on the temperature of the ground surface layer area. Accordingly, in order to accurately set the supply timing of the heat transfer medium, it is necessary to consider the weather conditions changing from moment to moment and to deal with these.

WO 96/25035 A discloses a control system for draining, irrigating and heating an athletic field in which, for heating the field, a controller closes off portions of a drainage subsystem and isolates some of the pipe rows from a main drain line and actuates a heating subsystem by actuating a heat exchanger and a recirculation, thereby causing heated water to flow into the remaining open network and to percolate into a fill layer at regions of the field. In addition to temperature probes embedded in the fill layer air temperature sensors may be employed under consideration of the fact that air temperature lowers prior to lowering of the ground temperature. By early sensing a lowered air temperature the heating subsystem is started up early so that the root zone of the field is heated sufficiently and the ground temperature does not drop below a predetermined value.

DE 4205010 A discloses a method for equalizing the demand of gas in a gas distribution system and considers in the control likely future temperature development in the supply area within a time period of more than 24 hours in the future. The likely future temperature development is determined on the basis of meteorological predictions.

SUMMARY OF THE INVENTION

An object of the invention is therefore, when the temperature control of ground is performed by a heat transfer medium supply pipe buried in the earth, to accurately control a ground temperature by performing prediction of a soil temperature including an estimation of a time lag of heat conduction and a weather change.

According to the invention to achieve the above object, there is provided a vegetation ground temperature control method as defined in claim 1. Preferred embodiments are defined in the dependent claims. According to the vegetation ground temperature control method of the invention for controlling a temperature of vegetation ground, a pipe is laid throughout the vegetation ground and a heat transfer medium is supplied in the pipe. In the temperature control method future weather conditions are estimated on the basis of weather data, and when the future weather conditions are estimated, with respect to at least an outside air temperature, an outside air temperature change curved line of past 24 hours corrected to be continuous with a present temperature is estimated, a temperature of a ground surface layer area is predicted by a heat conduction analysis with the future weather condition as boundary conditions, and supply of a heat transfer medium supplied to the pipe is controlled to make an underground temperature of the ground surface layer area a target soil temperature.

At the heat conduction analysis, a ground heat conductivity is obtained from a measurement result of a soil moisture meter on the basis of a correlation between the ground heat conductivity and soil moisture. Although the heat conductivity can also be obtained by an after-mentioned identification method, it can also be obtained from the measurement result of the soil moisture meter on the basis of the correlation between the ground heat conductivity and the soil moisture. Besides, the setting of the heat conductivity at the beginning of the analysis is obtained from the measurement result by the soil moisture meter, and the correction thereafter may be performed by the after-mentioned identification method.

According to the first aspect, the future weather conditions are estimated on the basis of, for example, the weather data measured by a weather observation equipment or the weather data announced by the Meteorological Agency or obtained from a civil weather prediction company or the like, so that the future temperature of the ground surface layer area is predicted, and the supply of the heat transfer medium supplied to the pipe is controlled so that the underground temperature of the ground surface layer area becomes the target soil temperature. That is, since a flow plan is made in view of the future prediction of the weather, it becomes possible to deal with a time lag of heat conduction and a weather change, and the accuracy can be certainly raised.

Although the weather conditions are changed from moment to moment, they are periodic variations when they are seen in broad perspective. As a setting method of future weather conditions, although there is, for example, a method of averaging changes of past ten years, in the invention, weather circumstances of past 24 hours are considered to be periodic boundary conditions. At this time, with respect to at least the outside air temperature, the outside air temperature change curved line of the past 24 hours corrected to be continuous with the present temperature is estimated, so that the soil temperature prediction with high accuracy is enabled.

According to a second aspect of the invention, there is provided the vegetation ground temperature control method as recited in the first aspect, in which the heat conduction analysis with the future weather conditions as the boundary conditions is performed at specified time intervals, and the supply control of the heat transfer medium is corrected in succession. Since the weather may be abruptly changed by wind or rain, the heat conduction analysis and the flow plan are corrected at the specified time intervals, so that it becomes possible to deal with the abrupt weather change.

According to a third aspect of the invention, there is provided the vegetation ground temperature control method as recited in the first or the second aspect, in which the weather data are observation data obtained by a weather observation equipment including at least an outside air temperature indicator, an pyrheliometer, and a net radiometer. In an after-mentioned heat balance equation of the ground surface, in the case where three parameters of the solar radiation absorption heat of a first term of a right side, the long wavelength radiation balance of a second term, and the convection heat conduction of a third term are considered, three terms of a solar radiation amount, an atmospheric radiation amount, and an outside air temperature are sufficient as the weather observation data.

According to a fourth aspect of the invention, there is provided the vegetation ground temperature control method as recited in the third aspect, in which the weather data include an outside air hygrometer and a wind speed meter.

BRIEF DESCRIPTION OF THE DRAWINGS

Fig. 1 is a plan view of a soccer field;
Fig. 2 is a schematic view of a weather data observation equipment unit;
Fig. 3 is a sectional view of a field in which a pipe, a thermocouple and the like are laid:
Fig. 4 is a view of the whole control system;
Fig. 5 is a view of a finite element analysis model;
Fig. 6 is a view showing an estimation procedure of a future weather condition (outside air temperature);
Fig. 7 is a view of a supply mode example of a heat transfer medium;
Fig. 8 is an analysis model view for identification of heat conductivity; and

Fig. 9 is a graph showing ground temperature control results of the invention.

DESCRIPTION OF THE PREFERRED EMBODIMENTS

Hereinafter, embodiments of the invention will be described in detail with reference to the drawings.

[Structure of vegetation ground, apparatus and the like]

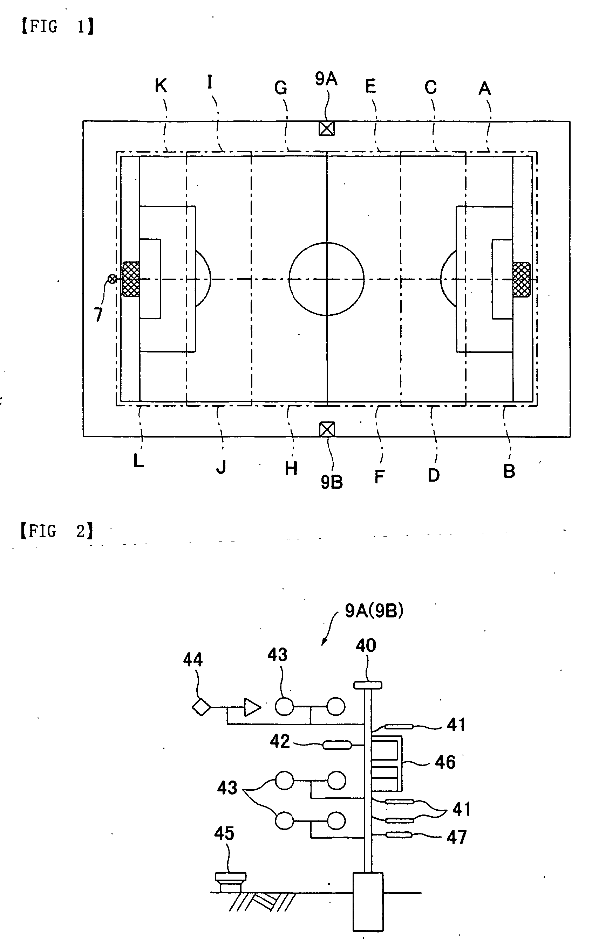

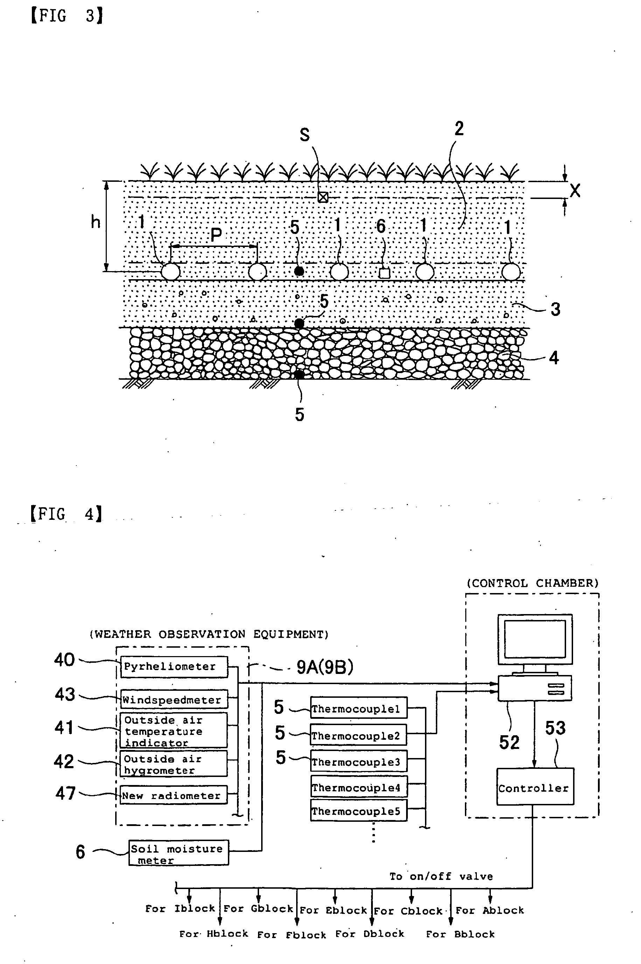

Fig. 1 is a plan view of a soccer field, Fig. 2 is a schematic view of a weather data measurement unit, and Fig. 3 is a sectional view of a field in which a pipe and a thermocouple are laid.
As shown in Fig. 3, the ground structure of the field has a three-layer structure of a fine sand layer 2 (including improved material), a gravel layer 3 and a broken stone layer 4 from the upper layer side in order to prevent sinking of the ground, rut digging and the like due to traffic of an administrative vehicle, such as a sprinkler truck and a lawn cutter vehicle, and in view of drainage. When a pipe 1 for circulating a heat transfer medium is buried in the vicinity of a surface layer, it may be deformed or ruptured by the upper load of the administrative vehicle or at games of the javelin throw, the hammer throw and the like, and therefore, it is buried in a safe place at a depth of several tens cm below the ground surface. Specifically, the depth h from the ground surface to the laying position of the pipe is generally 15 to 35 cm, preferably about 25 to 30 cm. Besides, with respect to the laying state, it is laid so as to be laid out in the same plane. Its installation interval P is about 15 to 60 cm in a normal example.
A heat transfer medium (indicating both a heating medium and a cooling medium), such as hot water or cold water with a predetermined temperature, is supplied to and circulated in the pipe 1 by not-shown heat source operation means. As another heat transfer medium, for example, a vapor, high temperature gas or the like can be used as a high temperature heat transfer medium, and chlorofluorocarbons, brine, ammonia or the like can be used as a low temperature heat transfer medium. Although the temperature of the heat transfer medium supplied to the pipe 1 is gradually raised or dropped by heat exchange with the ambient ground, the temperature of the heat transfer medium can be recovered to the original reference temperature by providing an auxiliary heat transfer medium tank, in which the heat transfer medium with a predetermined temperature is stored, in the middle of a flow path of the laid pipe 1 or by providing heating/ cooling means to the heat transfer medium, such as a heating/cooling coil.
On the other hand, in the invention, as shown in Fig. 1, the soccer field is divided into plural blocks, specifically, a block A to a block L, a heat transfer medium supply system of the pipe 1 is independently formed for each of the blocks A to L, and the heat transfer medium can be controlled to be supplied in each of the blocks A to L.
Besides, in the depth direction of the ground, for the purpose of improving the analysis accuracy, underground thermometers such as thermocouples 5, 5 ··· are buried at suitable intervals for comparison with calculated underground temperature and identification of heat conductivity. In this case, the thermocouples 5 are made to correspond to each of the blocks A to L and are provided at, for example, two to three places per one block, and in view of the upper load by the administrative vehicle, or the game such as the javelin throw or the hammer throw, plural ones are buried at the same depth as the pipe 1 and at positions deeper than this at suitable intervals. In this example, the three thermocouples 5, 5 ... in total are installed in the depth direction for each of the blocks. Incidentally, instead of the thermocouples 5, an optical fiber or the like may be used. With respect to the heat conductivity of the ground, since the present inventor et al. have found that there is a correlation between the heat conductivity of the ground and the soil moisture, a soil moisture meter 6 is buried, and the heat conductivity can be determined from a measurement value thereof.
Besides, two weather data measurement equipment units 9A and 9B are installed on the ground at the sides of the soccer field in order to measure various weather data. The weather data measurement equipment unit 9A (9B) is such that for example, as shown in Fig. 2, in addition to a pyrheliometer 40, outside air temperature indicators 41, 41 ···, an outside air hygrometer 42, a wind speed meter 43, and a net radiometer 47, for example, a wind vane 44 and a power supply 46 are installed to a pole provided upright on the ground, and they are respectively installed at the sides of the soccer field, so that both a sunny place and a shaded place can be measured although this depends on time. As the weather data measurement equipment, three kinds of meters, that is, the pyrheliometer 40, the net radiometer 47, and the outside air temperature indicators 41, 41 may be used from the relation with an analysis expression as described later. Incidentally, a rain gauge 45 is also installed on the ground near the weather data measurement equipment unit 9A (9B).

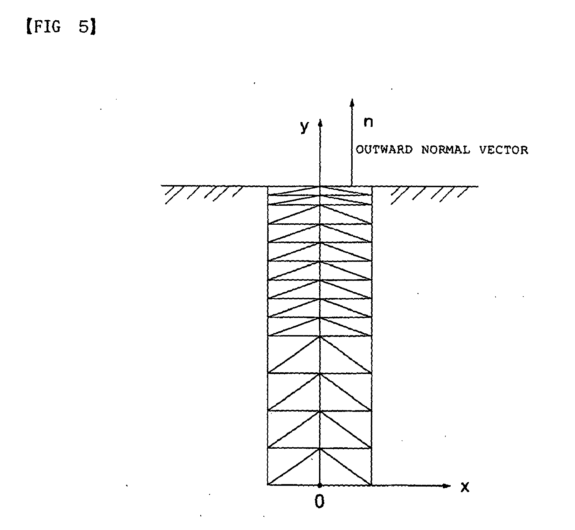

Fig. 4 is a view of a control system by the foregoing various measurement equipments. The weather data measured by the weather data measurement equipment unit 9A (9B) and the measurement data by the thermocouples 5, 5 ··· buried in the earth are inputted to a control computer 52. The control computer 52 obtains an underground temperature of a ground surface layer area X, in which the thermocouple 5 can not be buried, by an after-mentioned heat conduction analysis on the basis of the measurement information, executes after-mentioned optimum control calculation on the basis of the calculated underground temperature, and makes a flow plan to the respective blocks. Then, on the basis of this flow plan, a controller 53 issues instructions to control valves for controlling water conduction to the respective blocks.

Especially in the ground temperature control of the invention, future weather conditions are estimated on the basis of the past weather measurement data stored in the control computer 52, the underground temperature of the ground surface layer area X is predicted by the heat conduction analysis with the future weather conditions as the boundary conditions, and the heat transfer medium supplied to the pipe 1 is controlled in accordance with the flow plan made in view of the heat conductivity of the ground, so that the underground temperature of the ground surface layer area X is made a target soil temperature.

When the future weather conditions are estimated, with respect to at least the outside air temperature, an outside air temperature change curved line of past 24 hours corrected to be continuous with the present temperature is estimated.

As stated above, the future conditions of the weather are estimated and the soil temperature is predicted, so that it becomes possible to deal with a time lag of thermal response and a weather change. In case the estimated weather situation is abruptly changed, the boundary conditions may become ones different from the estimation, and therefore, it is desirable that the heat conduction analysis with the future weather conditions as the boundary conditions is performed at specified time intervals, and the supply control of the heat transfer medium is corrected in succession. It is preferable that the time interval of the heat conductivity analysis is made 1 to 5 hours, preferably 2 to 3 hour.

Hereinafter, the analysis and control method of the invention will be specifically described in detail from the control start in accordance with a procedure.

[Step 1] ... heat conduction analysis

(Measurement of weather data)

The weather data measurement equipment unit 9A (9B) obtains various weather observation data, and the buried thermocouples 5, 5 ... perform underground temperature measurements to obtain data, and they are stored in the control computer 52.

(Prediction calculation of soil temperature of the ground surface layer area X)

On the basis of the past weather data stored in the control computer 52, the future weather conditions are estimated for each of the blocks A to L. At this time, on the assumption that the weather conditions of yesterday are basically repeated as the future weather conditions, the future weather conditions are estimated so that the weather conditions of the past 24 hours are repeated. However, with respect to at least the outside air temperature $T(t)$, as indicated in a following expression (1), when the temperature of yesterday is made $T^{(0)}(t)$: $t \in [a, b]$, $T^{(0)}(t)$ is made a standard, and extrapolation is made so that a temperature after 24 hours becomes equal to the present temperature.

[Mathematical expression 1]

$$T(t) = T^{(0)}(t) - \{T(b) - T(a)\} - \frac{t-a}{b-a}\{T(b) - T(a)\}$$

$$= T^{(0)}(t) + \frac{b-t}{b-a}\{T(b) - T(a)\} \quad \cdots (1)$$

Here, T(t): future temperature (°C)
$T^{(0)}(t)$ : temperature (°C) of yesterday, where $t \in$ [a (24 hours before), b (present)]

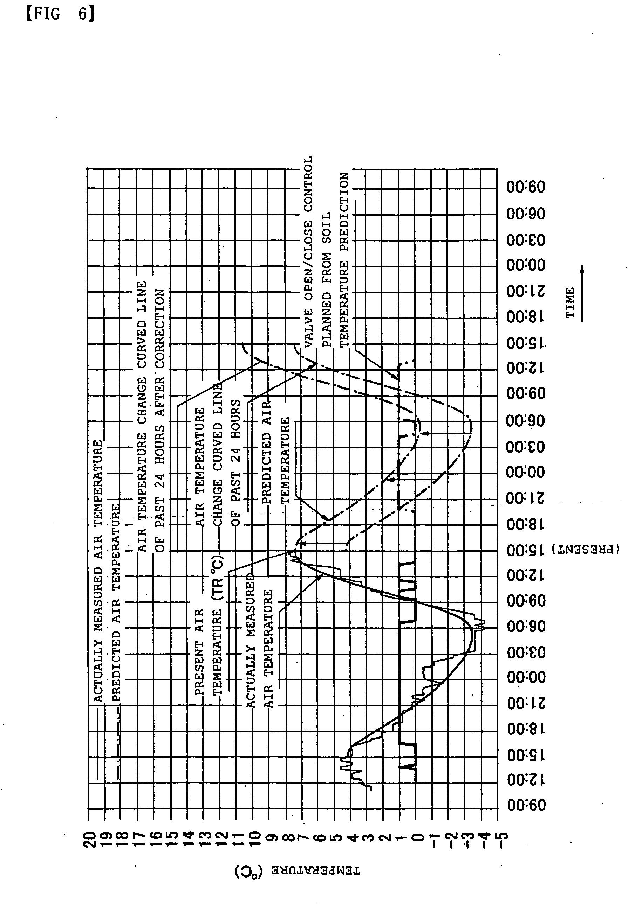

Further, an intelligible explanation will be made on the basis of Fig. 6. From the present time to the future, an air temperature change curved line of past 24 hours is corrected to be continuous with a present temperature ($T_R$) point, and this is estimated as a future outside air temperature change curved line. With respect to other weather conditions, on the assumption that the weather conditions of the past 24 hours are simply repeated, the weather conditions are set. On the other hand, with respect to humidity and wind speed, although a humidity change curved line and a wind speed change curved line of 24 hours ago may be estimated to be continuous with the present humidity and wind speed, the present humidity and present wind speed may be estimated to have constant values and to be continuous. Incidentally, with respect to solar radiation and radiation balance, even if it is supposed that the weather conditions o.f the past 24 hours are repeated, it is sufficient in accuracy.

When the future weather conditions are set, in a finite element model shown in Fig. 5 in which the structure of the ground surface layer area is modeled, the heat conduction analysis is performed on the basis of a two-dimensional heat conduction equation and a heat balance equation of the ground surface.

(Analytical equation)

The two-dimensional heat conduction equation is indicated by a following expression (2).

[Mathematical expression 2]

$$\rho C \frac{\partial T}{\partial t} = \frac{\partial}{\partial x}\left[k\frac{\partial T}{\partial x}\right] + \frac{\partial}{\partial y}\left[k\frac{\partial T}{\partial y}\right] + Q \quad \cdots (2)$$

As the two-dimensional heat conduction equation, a primitive equation of heat conduction analysis is used. Here, T denotes temperature, $\rho$, C and $\kappa$ denote density of ground material, specific heat at constant pressure, and heat conductivity, respectively, and Q denotes a heat generation term per unit volume. In order to solve the above expression (2), a boundary condition shown below is required.

[Mathematical expression 3]

$$T(x,y,t) = \hat{T}(x,y,t) \quad on \quad \Gamma_1 \quad \cdots (3)$$

[Mathematical expression 4]

$$k\left(\frac{\partial T}{\partial x}n_x + \frac{\partial T}{\partial y}n_y\right) = \hat{Q}(x,y,t) \quad on \quad \Gamma_2 \quad \cdots (4)$$

Here, T^ (note: ^ is affixed to just the upper part) denotes a temperature given on a boundary $\Gamma_1$, and Q^ denotes a flux of heat given on a boundary $\Gamma_2$.
The letters $n_x$ and ny denote components of an outward normal vector with respect to $\Gamma_2$. When the analysis area of the finite element model shown in Fig. 5 is considered, $n_x$ = cos (n, x) = cos90° = 0, and ny = cos(n, y) = cos0° = 1 are established, and therefore, the above expression (4) becomes a following expression (5).

[Mathematical expression 5]

$$k\left(\frac{\partial T}{\partial x}n_x + \frac{\partial T}{\partial y}n_y\right) = k\frac{\partial T}{\partial y} \quad \cdots (5)$$

The heat flux of the boundary $\Gamma_2$ can be calculated by the heat balance equation.
Hereinafter, a method for calculating the boundary condition from the heat balance equation will be described in detail. First, the heat balance equation is indicated by a following expression (6).

[Mathematical expression 6]

$$-\lambda \left( \frac{\partial T}{\partial y} \right) = \hat{Q}(x,y,t)$$

$$= a \cdot TH + \varepsilon(AH - \sigma Ts^4) + \alpha_c(Ta - Ts) + K \frac{\alpha_c}{Ca}(Xa - Xss)L \quad \cdots \quad (6)$$

Here, Ts: ground surface temperature
a: solar radiation absorptance
TH: solar radiation amount
$\varepsilon$: radiation emissivity
$AH - \sigma Ts^4$ : atmospheric radiation amount
$\alpha_c$: surface heat conductivity
Ta: outside air temperature
K: moisture evaporation ratio
Ca: humid heat of air
L: latent heat of vaporization of water
Xa: absolute humidity of outside air
Xss: saturation absolute humidity at ground surface temperature

In the above expression (6), the left side indicates a heat conduction term, the first term of the right side indicates solar radiation absorption heat, the second term thereof indicates long wavelength radiation balance, the third term thereof indicates convection heat conduction, and the fourth term thereof indicates latent heat of vaporization. In this case, with respect to the respective parameters, realistic numerical definition based on actual measurement and past documents is performed. Incidentally, in the heat balance equation, Ts (ground surface temperature) is not a measurement value, and a calculation temperature at the former heat conduction analysis is inserted and calculation is executed.

(a) Solar radiation absorptance; a

From the past documents, a = 0.66 in the case of a dry lawn, and a = 0.75 in the case of a wet lawn.

(b) Solar radiation amount; TH

The solar radiation amount includes a direct solar radiation amount by sun light, and a radiant sky solar radiation amount, and both of them are given as the solar radiation amount in a sunny place, and only the sky solar radiation amount is given in a shaded place. Accordingly, as described above, the weather data of the sunny place and the shaded place are respectively properly used by the two weather data measurement equipment units 9A and 9B.

(c) Radiation emissivity; $\varepsilon$

From the past documents, it is made $\varepsilon$ = 0.93.

(d) Atmospheric radiation amount; $AH - \sigma Ts^4$

It is made a measurement value by the net radiometer 47.

(e) Surface heat conductivity; $\alpha_c$

From the past documents, it is calculated from a wind speed $V_h$ at an arbitrary height h according to a following expression (7). Incidentally, it is assumed that the wind speed exponent is 0.25.

[Mathematical expression 7]

$$\alpha_c = 3 \left[ 1 + \frac{V_h}{\left[\frac{h}{8}\right]^{0.25}} \right] \left[ W/m^2{}^\circ C \right] = 2.58 \left[ 1 + \frac{V_h}{\left[\frac{h}{8}\right]^{0.25}} \right] (Kcal/m^2 h{}^\circ C) \quad \cdots \ (7)$$

(f) Moisture evaporation ratio; K

From the past documents, K: 0.1 to 0.2 (it is considered that evaporation occurs at a ratio of K in an amount of precipitation)

(g) Humid heat of air; Ca

From the past documents, Ca = 0.501 kcal/kg°C in the case of water vapor, and Ca = 0.241 kcal/kg°C in the case of air.

(h) Latent heat of vaporization of water; L

From the past documents, it is made L = 597.5 kcal/kg.

Incidentally, in the heat balance equation of the ground surface, the degrees of influence of the respective parameters are in the order of solar radiation absorption heat > long wavelength radiation balance > convection heat conduction > latent heat of vaporization, and it is necessary to always consider at least the solar radiation absorption heat of the first term of the right side and the long wavelength radiation balance of the second term. However, for example, the convection heat conduction of the third term can be omitted under such a condition that the influence of a wind creeping on the ground is small as in a stadium surrounded by a roof. Besides, in the case where high accuracy is not required, the latent heat of vaporization of the fourth term can be neglected. Accordingly, in case the heat balance equation is made to include consideration to the three parameters of the solar radiation absorption heat of the first term of the right side, the long wavelength radiation balance of the second term, and the convection heat conduction of the third term, the three terms of the solar radiation amount, the atmospheric radiation amount, and the outside air temperature are sufficient as the weather observation data.

Incidentally, in the heat conduction analysis, since the temperatures at the positions where the thermocouples 5, 5 ⋯ are buried are known by measurement, the measurement temperatures are inserted to node positions on the analysis mode to improve the calculation accuracy

On the other hand, an initial condition is given by a following expression (8).

[Mathematical expression 8]

$$T(x,y,0) = T_0(x,y) \quad \cdots \ (8)$$

A normal Galerkin method is applied to primitive equations, and variables are discretized by three-node triangular elements, so that a following finite element equation is obtained.

[Mathematical expression 9]

$$\left[ M_{\alpha\beta} + \frac{\Delta t}{2} S_{\alpha\beta} \right] T_\beta^{n+1} = \left[ M_{\alpha\beta} - \frac{\Delta t}{2} S_{\alpha\beta} \right] T_\beta^n + \Delta t \, \hat{\Omega}_\alpha^{n+1} \quad \cdots \ (9)$$

Here, $M\alpha\beta$, $S\alpha\beta$ and $\Omega\alpha$ (note: $\alpha$ and $\beta$ are indexes) denote a mass matrix, a diffusion matrix, and a flux vector, respectively, and $\Delta t$ denotes an infinitesimal time increment. For discretization in a time direction, a Crank-Nicolson method is adopted.

From the above heat conduction analysis, the temperature of the ground surface layer area X from the present to the future (until 24 hours later when the future weather conditions are set) can be obtained by calculation.

[Step 2] ... Planning of a flow plan by optimum control calculation

In the above, since the soil temperature of the ground surface layer area X whose temperature can not be directly measured can be grasped by the procedure of the step 1, as a next procedure, the flow plan of the heat transfer medium supplied to the pipe 1 is made so that a noticed point S (see Fig. 3, a point at a depth of several cm below the ground surface, where temperature control becomes important for the growth of the lawn, for example, a point at a depth of 5 cm) set in the ground surface layer area X comes to have a target temperature. Specifically, it is possible to give a first mode in which the heat transfer medium is supplied to the pipe 1 so that the temperature of the noticed point S does not become a specified temperature or lower, and a second mode in which the heat transfer medium is supplied to the pipe 1 to follow the soil temperature of a block where sunshine is sufficient. In this example, the first mode is adopted, and a description will be given to a case where a control object is made the mode in which the heat transfer medium is supplied so that the soil temperature of the noticed point S becomes a set temperature or higher.

(Control analysis of heat transfer medium)

The two-dimensional heat conduction equation (2) can be expressed in a following matrix form.

[Mathematical expression 10]

$$[S]\{T\}+[M]\left[\frac{\partial T}{\partial t}\right]=\{F\} \qquad \cdots (10)$$

Here, S: heat conduction matrix, T: temperature vector of node point, F: heat flux vector, M: heat capacity matrix.
When a heating effect by water conduction is considered to be heat generation at a node of a pipe position, and the water conduction is considered to be only an on/off operation by switching of a three-way valve, the control becomes a bang-bang control in which a heat generation term Q takes either 0 (at the time of non-flow) or Qo (at the time of flow).
The term of the expression (10) relating to the heat generation rate of the control object node is separated and is modified as indicated by a following expression (11).

[Mathematical expression 11]

$$T = AT + Bu + C \qquad \cdots (11)$$

At $t \in [t_0, t_f]$ ($t_0$: start time of control, $t_f$: end time of control), in accordance with the above expression (11), a problem of obtaining a control u(t) to minimize an evaluation function of a following expression (12) is solved as an optimum regulator problem. As an algorism starting from an initial value of a suitable control variable to improve an evaluation function value, a Sakawa-Shindo method is used.

[Mathematical expression 12]

$$J = \frac{1}{2}\int_{t_0}^{t_f}\left[\{T^*-T(t)\}^t[Q]\{T^*-T(t)\} + \{u(t)\}^t[R]\{u(t)\}\right]dt \qquad \cdots (12)$$

Here, T*: target temperature at the noticed point, T(t): temperature obtained by numerical calculation, and u(t): control heat amount.
In this example, since the object of the temperature control is to make the temperature of the noticed point S a value not lower than a specified value, in the above expression (12), the diagonal matrix [Q] expressing the weight is determined to be one as in a following expression (13), not to be a constant value as in a normal case, and $Q_{lower} >> Q_{upper}$ is established so that the evaluation function takes a larger value when the node temperature is lower than the target value.

[Mathematical expression 13]

$$Q = \frac{Q_{upper}(T(t) \geqq T^{*})}{Q_{lower}(T(t) < T^{*})} \quad \cdots (13)$$

In this example, on the basis of the soil temperature calculation result of the soil temperature control object area, spatial and temporal temperature change is grasped by, for example, the finite element method while the heat conductivity of the ground is considered, and a flow pattern (water conduction/water stop pattern) of the heat transfer medium is obtained so that a difference between the target temperature of the noticed point S and the calculation temperature becomes minimum, and the soil temperature is controlled. Accordingly, the ground surface layer area having the greatest influence on the growth of the lawn can be controlled into a suitable temperature environment.

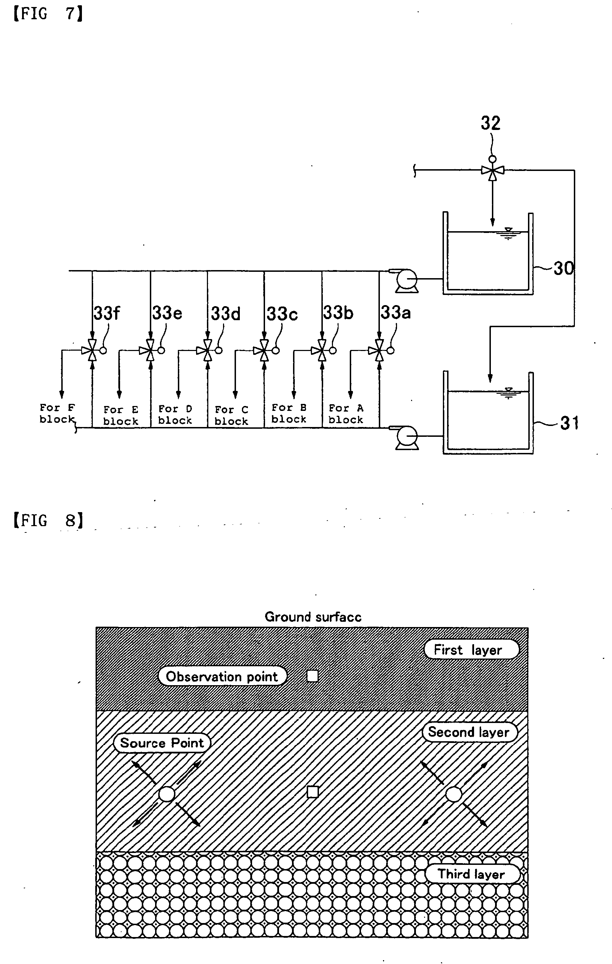

Incidentally, in this example, the control is performed so that the soil temperature becomes the set temperature or higher, and the upper limit value is not set in the control. However, in the case where the upper limit value is set, there is also a case where hot water and/or cold water is controlled to be supplied. In this case, as shown in Fig. 7, a hot water tank 30 for storing hot water at a high temperature side (temperature a) and a cold water tank 31 for storing cold water at a low temperature side (temperature b) are separately prepared, and the hot water tank 30 and the cold water tank 31 are switched by switching control valves 32, 33a, 33b ..., so that the hot water or the cold water with a specific temperature can be quickly supplied without control delay at specified time intervals. Besides, according to seasons, only one of the hot water tank 30 and the cold water tank 31 is prepared, and one-stage control can be performed.

[Identification of physical value (heat conductivity)]

Next, an identification method of the heat conductivity will be described. At the setting of the heat conductivity, a correlation between the heat conductivity and soil moisture is previously examined and is held as data, and it is obtained from measurement results of the soil moisture meter 6 buried in the ground. However, because of the irregularity of the ground and the indefiniteness of a moisture ratio, it can not be said that the heat conductivity at the original position is accurately expressed. Besides, since the heat conductivity is also changed by the water-bearing state in the ground, in order to raise the analysis accuracy, it is desirable to suitably perform the correction of the heat conductivity.

As the identification method of the heat conductivity, it is possible to give a first method in which an underground thermometer is installed in the ground surface layer area X or in its near place irregularly or periodically and temporarily, an actually measured underground temperature measured by this underground thermometer is compared with a calculated underground temperature at the underground thermometer buried position, which is obtained by the heat conduction analysis with the weather data measured by the weather data measurement equipment as the boundary conditions, and.the heat conductivity is corrected so as to decrease the residual, and a second method in which a thermocouple 7 for heat conductivity calibration is buried in the ground surface layer area other than an area where the underground thermometer can not be buried or in its near region, specifically in the example of the soccer field, as shown in Fig. 1, in a lawn area or the like which is not roughened in games, such as the back place of the goal post, an actually measured underground temperature measured by this thermocouple 7 for the heat conductivity calibration is compared with the calculated underground temperature at the underground thermometer buried position, which is obtained by the heat conductivity analysis with the weather data measured by the weather data measurement equipment as the boundary conditions, and the heat conductivity is corrected so as to decrease the residual.

At the identification of the heat conductivity, a method is used in which the estimation of the heat conductivity is treated as an inverse problem, and it is identified using a nonlinear least square method. That is, a time history of temperature observed in the ground is used, and it is obtained by making the residual between the calculated value at a position corresponding to the observation point and the observed value minimum. In this case, a Gauss-Newton method is used to minimize the residual sum of squares of the calculated value and the observed value, that is, an evaluation function.

As shown in Fig. 8, the ground structure is made of some layers (partial areas), and it is assumed that the heat conductivities in the respective layers are constant. The heat conductivity is generally expressed by a following expression (14).

[Mathematical expression 14]

$$k_\lambda{}^T = \{k_1, k_2, k_3, \cdots, k_n\} \quad \cdots \quad (14)$$

Here, $\lambda$ denotes number of heat conductivity corresponding to a partial area, and n denotes the total number of partial areas.

Besides, a temperature at an observation point provided in the analysis area is expressed as follows.

[Mathematical expression 15]

$$\widetilde{T}_\mu(t)^T = \{\widetilde{T}_1(t), \widetilde{T}_2(t), \widetilde{T}_3(t), \cdots, \widetilde{T}_m(t)\} \quad \cdots \quad (15)$$

Where, $\sim$ means an observation value, $\mu$ denotes number of an observation point, and m denotes the total number of observation points. Similarly, a calculation value at nodes corresponding to the observation points 1 to m is expressed as follows.

[Mathematical expression 16]

$$T_\mu(t, k_\lambda)^T$$
$$= \{T_1(t, k_\lambda), T_2(t, k_\lambda), T_3(t, k_\lambda), \cdots, T_m(t, k_\lambda)\} \quad \cdots \quad (16)$$

The evaluation function for obtaining the heat conductivity is expressed by the residual sum of squares of observed temperatures and corresponding temperature calculation values as indicated below.

[Mathematical expression 17]

$$J(k_\lambda) = \frac{1}{2} \int_{t_0}^{t_f} \{\widetilde{T}_\mu(t) - T_\mu(t, k_\lambda)\}^T \{\widetilde{T}_\mu(t) - T_\mu(t, k_\lambda)\} dt \quad \cdots \quad (17)$$

Here, $t_0$ and $t_f$ denote a calculation start time and a calculation end time, respectively. As is understood from this expression, since the evaluation function is a function of heat conductivity $k\lambda$, the optimum heat conductivity $k\lambda$ can be obtained by minimizing the expression (17) by, for example, a Gauss-Newton method.

Besides, a sensitivity matrix of each of the parameters is obtained by a sensitivity equation method.

[Mathematical expression 18]

$$\left[M_{\alpha\beta} + \frac{\Delta t}{2} S_{\alpha\beta}\right] \frac{\partial T_\beta{}^{n+1}}{\partial k_\lambda} = \left[M_{\alpha\beta} - \frac{\Delta t}{2} S_{\alpha\beta}\right] \frac{\partial T_\beta{}^n}{\partial k_\lambda}$$
$$- \frac{\Delta t}{2} \frac{\partial S_{\alpha\beta}}{\partial k_\lambda} (T_\beta{}^{n+1} + T_\beta{}^n) + \Delta t \frac{\partial \hat{\Omega}_\alpha{}^{n+1}}{\partial k_\lambda} \quad \cdots \quad (18)$$

An increment value $\Delta k_\lambda{}^i$ can be obtained from following expressions (19) and (20).

[Mathematical expression 19]

$$\frac{\partial J(k_\lambda' + \Delta k_\lambda')}{\partial k_\lambda}$$

$$= \int_{t_0}^{t_f} \left[\frac{\partial T_\mu}{\partial k_\lambda}\right]^T \left\{\widetilde{T}_\mu(t) - T_\mu(t, k_\lambda') - \frac{\partial T_\mu}{\partial k_\lambda}\Delta k_\lambda'\right\}dt = 0 \qquad \cdots (19)$$

[Mathematical expression 20]

$$\Delta k_\lambda' = \left(\int_{t_0}^{t_f} \left[\frac{\partial T_\mu}{\partial k_\lambda}\right]\left[\frac{\partial T_\mu}{\partial k_\omega}\right]^T dt\right)^{-1}$$

$$\left(\int_{t_0}^{t_f} \left[\frac{\partial T_\mu}{\partial k_\omega}\right]\left\{\widetilde{T}_\mu(t) - T_\mu(t, k_\lambda')\right\}dt\right) \qquad \cdots (20)$$

By the above procedure, the heat conductivities of the respective areas can be obtained.

Experimental results of a case will be described in which in accordance with the invention, the future weather conditions are estimated on the basis of the past weather measurement data, the underground temperature of the ground surface layer area X is predicted by the heat conductivity analysis with the future weather conditions as the boundary conditions, and the flow pattern is set and the ground temperature control is performed in order to make the underground temperature of the ground surface layer area X the target soil temperature. At this time, with respect to the outside air temperature, the outside air temperature change curved line of the past 24 hours corrected to be continuous with the present temperature is estimated, and with respect to the other weather conditions, specifically with respect to the solar radiation amount, the atmospheric radiation amount, the humidity, and the wind speed, it is assumed that the weather of the past 24 hours is simply repeated. In the soil temperature control, the flow pattern is set so that the temperature of the noticed point S is not lower than 3°C.

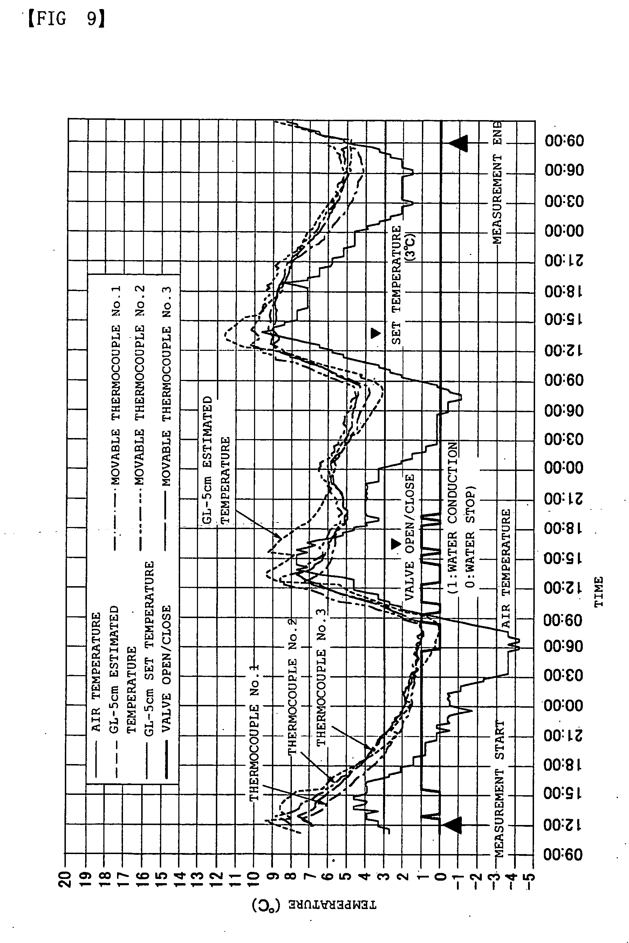

Fig. 9 shows the results. As is apparent from the drawing, the results are such that the estimated temperature of GL-5 cm is extremely coincident with the measurement result by the three thermocouples No 1 to No 3, and the propriety of the invention is verified.

As described above in detail, according to the invention, when the temperature control of the ground is performed by the pipe for supplying the heat transfer medium buried in the earth, since the heat transfer medium supplied to the pipe is controlled on the basis of the soil temperature prediction analysis estimating the future weather conditions, it becomes possible to deal with the time lag of heat conduction and the weather change, and the ground temperature can be controlled with high accuracy.

**Claims**

1. A vegetation ground temperature control method for controlling a temperature of vegetation ground (2,3,4) by laying a pipe (1) throughout the vegetation ground (2,3,4) and supplying a heat transfer medium in the pipe (1), wherein future weather conditions are estimated on the basis of weather data,
   **characterized in that**
   when the future weather conditions are estimated, with respect to at least an outside air temperature, an outside air temperature change curved line of past 24 hours corrected to be continuous with a present temperature is estimated, a temperature of a ground surface layer area is predicted by a heat conduction analysis with the future weather conditions as boundary conditions, and supply of the heat transfer medium supplied to the pipe (1) is controlled to make an underground temperature of the ground surface layer area a target soil temperature, wherein, at the heat conduction analysis, a ground heat conductivity is obtained from a measurement result of a soil moisture meter (6) on the basis of a correlation between the ground heat conductivity and soil moisture.

2. The vegetation ground temperature control method as recited in claim 1, wherein the heat conduction analysis with the future weather conditions as the boundary conditions is performed at specified time intervals, and the supply control of the heat transfer medium is corrected in succession.

3. The vegetation ground temperature control method as recited in claim 1 or 2, wherein the weather data are observation data obtained by a weather observation equipment (9A,9B) including at least an outside air temperature indicator (41), an pyrheliometer (40), and a net radiometer (47).

4. The vegetation ground temperature control method as recited in claim 3, wherein the weather data include observation data obtained by an outside air hygrometer (42) and a wind speed meter (43).

**Patentansprüche**

1. Temperaturregelungsverfahren für eine lebende Bodendecke zum Steuern einer Temperatur der lebenden Bodendecke (2,3,4) durch Verlegen einer Rohrleitung (1) in der gesamten lebenden Bodendecke (2,3,4) und zum Zuführen eines Wärmeübertragungsmediums in dem Rohr (1), wobei zukünftige Wetterbedingungen auf der Basis von Wetterdaten geschätzt werden,
**dadurch gekennzeichnet, dass**
wenn die zukünftigen Wetterbedingungen zumindest in Bezug auf eine Außenlufttemperatur geschätzt werden, eine Außenlufttemperaturänderungs-Kurvenlinie der letzten 24 Stunden, die so korrigiert ist, dass sie in eine aktuelle Temperatur übergeht, geschätzt wird, eine Temperatur eines Boden-Oberflächenschichtbereichs durch eine Wärmeleitanalyse mit den zukünftigen Wetterbedingungen als Randbedingungen vorhergesagt wird, und die Zufuhr des der Rohrleitung (1) zugeführten Wärmeübertragungsmediums so gesteuert wird, dass eine Unterbodentemperatur des Boden-Oberflächenschichtbereichs zu einer Ziel-Bodentemperatur wird, wobei bei der Wärmeleitanalyse eine Boden-Wärmeleitfähigkeit aus einem Messergebnis eines Boden-Feuchtigkeitsmessers (6) auf der Basis einer Beziehung zwischen der Boden-Wärmeleitfähigkeit und der Bodenfeuchtigkeit erhalten wird.

2. Temperaturregelungsverfahren für eine lebende Bodendecke nach Anspruch 1, wobei die Wärmeleitanalyse mit den zukünftigen Wetterbedingungen als Randbedingungen in festgelegten Zeitabständen durchgeführt wird, und die Steuerung der Zufuhr des Wärmeübertragungsmediums daraufhin korrigiert wird.

3. Temperaturregelungsverfahren für eine lebende Bodendecke nach Anspruch 1 oder 2, wobei die Wetterdaten Beobachtungsdaten sind, die durch eine Wetterbeobachtungsstation (9A,9B) mit mindestens einem Außenluft-Temperaturanzeiger (41), einem Pyrheliometer (40) und einem Netz-Radiometer (47) erhalten werden.

4. Temperaturregelungsverfahren für eine lebende Bodendecke nach Anspruch 3, wobei die Wetterdaten Beobachtungsdaten enthalten, die durch ein Außenluft-Hygrometer (42) und einen Windgeschwindigkeitsmesser (43) erhalten werden.

**Revendications**

1. Procédé de réglage de la température d'une terre plantée pour régler la température d'une terre (2, 3, 4) plantée en mettant un conduit (1) dans la terre (2, 3, 4) plantée et en envoyant un fluide de transfert de chaleur dans le conduit (1), des conditions météorologiques à venir étant estimées sur la base de données météorologiques, **caractérisé en ce que** lorsque l'on estime les conditions météorologiques à venir pour ce qui concerne au moins une température de l'air extérieur, on estime une courbe de changement de la température de l'air extérieur des dernières 24 heures, corrigée de manière à être continue avec la température présente, on prédit une superficie de couche en surface de la terre par une analyse de conduction de la chaleur avec les conditions météorologiques à venir comme conditions aux limites et on règle l'envoi du fluide de transfert de chaleur dans le conduit (1) pour obtenir une température souterraine de la superficie de couche de la surface de la terre, qui soit une température de la terre cible, dans lequel lors de l'analyse de conduction de la chaleur, on obtient une conductivité thermique de la terre à partir du résultat de la mesure d'un dispositif (6) de mesure de l'humidité de la terre sur la base d'une corrélation entre la conductivité calorifique de la terre et de l'humidité de la terre.

2. Procédé de réglage de la température d'une terre plantée suivant la revendication 1, dans lequel on effectue l'analyse de conduction calorifique en ayant les conditions météorologiques à venir comme conditions limites à des intervalles de temps spécifiés et on corrige successivement le réglage de l'alimentation en le fluide de transfert de la chaleur.

3. Procédé de réglage de la température d'une terre plantée suivant la revendication 1 ou 2, dans lequel les donnés météorologiques sont des données d'observations obtenues par un équipement (9A, 9B) d'observations météorologiques y compris au moins un indicateur (41) de la température de l'air extérieur, un pyrhéliomètre (40) et un radiomètre (47) net.

4. Procédé de réglage de la température d'une terre plantée suivant la revendication 3, dans lequel les données météorologiques comprennent des données d'observations obtenues par un hygromètre (42) de l'air extérieur et par un dispositif (43) de mesure de la vitesse du vent.

【FIG 1】

【FIG 2】

[FIG 3]

[FIG 4]

[FIG 5]

【FIG 6】

TIME

ACTUALLY MEASURED AIR TEMPERATURE

PREDICTED AIR TEMPERATURE

AIR TEMPERATURE CHANGE CURVED LINE OF PAST 24 HOURS AFTER CORRECTION

PRESENT AIR TEMPERATURE (TR °C)

AIR TEMPERATURE CHANGE CURVED LINE OF PAST 24 HOURS

ACTUALLY MEASURED AIR TEMPERATURE

PREDICTED AIR TEMPERATURE

VALVE OPEN/CLOSE CONTROL PLANNED FROM SOIL TEMPERATURE PREDICTION

TEMPERATURE (°C)

(PRESENT)

[FIG 7]

[FIG 8]

【FIG 9】

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9625035 A
- DE 4205010 A